# DEMANDE DE BREVET EUROPEEN

(11) **EP 0 575 226 A1**
(43) Date de publication de la demande: **22.12.1993**
(21) Numéro de dépôt: 93401473.9
(22) Date de dépôt: 09.06.1993
(51) Int. Cl.: B60B 35/14, B60K 17/16

(54) **Pont rigide pour véhicule tout terrain**

(30) Priorité: 19.06.1992 FR 9207522
(71) Demandeur: Dangel, Henry, F-68100 Mulhouse (FR)
(72) Inventeur: Dangel, Henry, F-68100 Mulhouse (FR)
(74) Mandataire: Martin, Jean-Paul

(57) **Abrégé**

Ce pont est cintré de manière à présenter un profil en V renversé largement ouvert vers le bas et offrant dans sa partie centrale une garde au sol supérieure à celle d'un pont rectiligne classique; le pont comprend deux tubes (5) ou "trompettes" rigidement fixés à un différentiel central (6) contenant des arbres de transmission (11) équipés à leurs extrémités de joints (10, 12) d'articulation sur le différentiel et sur les moyeux des roues (1). Le pont rigide cintré selon l'invention accroît notablement les capacités de franchissement du véhicule.

## Description

La présente invention a pour objet un pont rigide pour véhicule tout terrain, ce pont pouvant être soit le pont avant, directeur, soit le pont arrière, fixe.

On sait que sur les véhicules légers la garde au sol est faible, car la transmission est pratiquement horizontale, l'axe des roues étant confondu avec l'axe du différentiel. Il en résulte que de telles transmissions sont mal adaptées à des véhicules tout terrain, dont elles limitent les capacités de franchissement.

Pour résoudre ce problème, on a proposé de réaliser des ponts portiques au niveau des roues, permettant grâce à des trains de pignons de surélever la transmission, et donc d'augmenter la garde au sol du véhicule. Mais ces dispositifs n'ont été en pratique utilisés que sur de gros camions lourds, et non sur des véhicules légers tout terrain, auxquels ils sont inadaptés. En effet ces dispositifs sont très lourds et très onéreux, car ils nécessitent une multiplicité d'organes supplémentaires (carters, roulements, pignons, circuits hydrauliques...).

L'invention a donc pour but de réaliser, sur un véhicule tout terrain, un dispositif permettant d'augmenter sa garde au sol avec des moyens relativement simples et peu onéreux, afin d'accroître ses capacités de franchissement.

Conformément à l'invention, le pont rigide est cintré de manière à présenter un profil en V renversé, largement ouvert et offrant donc dans sa partie centrale, une garde au sol supérieure à celle d'un pont rectiligne classique.

Suivant un mode de réalisation préférentiel, le pont comprend deux tubes, rigidement fixés à un différentiel central, contenant des arbres de transmission équipés à leurs extrémités de joints d'articulation sur le différentiel et sur les moyeux des roues.

D'autres particularités et avantages de l'invention apparaîtront au cours de la description qui va suivre, faite en référence aux dessins annexés qui en illustrent deux formes de réalisations à titre d'exemples non limitatif.

La figure 1 est une vue mi-coupe dans un plan vertical mi-élévation d'une forme de réalisation d'un pont avant pour véhicule léger tout terrain.

La figure 2 est une vue mi-coupe mi-élévation, analogue à la Fig.1, d'un pont arrière rigide de véhicule léger tout terrain selon une seconde forme de réalisation de l'invention.

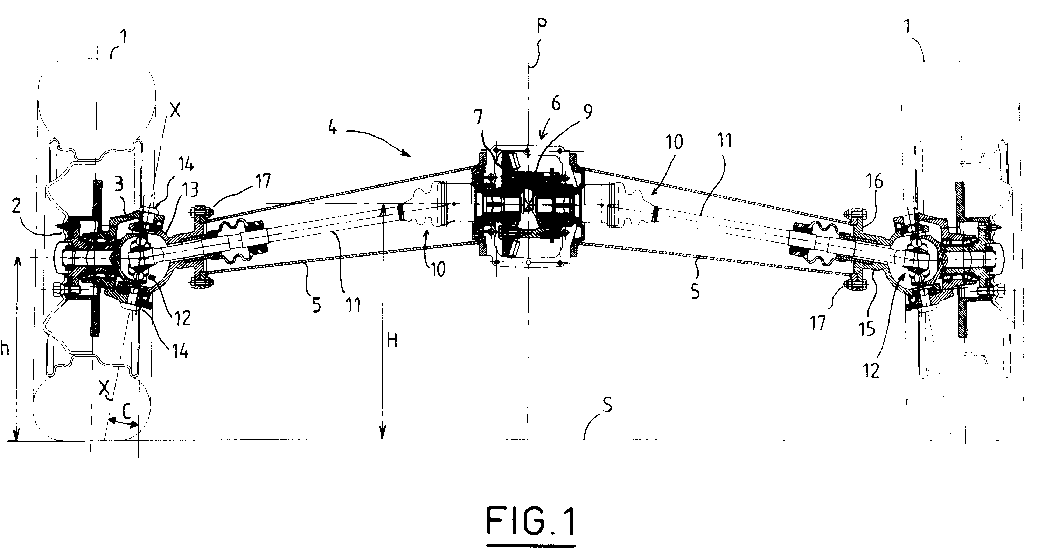

Le train avant d'un véhicule léger tout terrain représenté à la Fig.1 comprend deux roues directrices 1 avec leurs moyeux 2 et leurs fusées 3, réalisés de manière connue en soi, et un pont rigide 4 cintré de manière à présenter un profil en V renversé, largement ouvert vers le bas.

Le pont 4 comprend deux tubes 5 disposés symétriquement l'un de l'autre de part et d'autre du plan vertical axial P du train avant et du véhicule. Les tubes 5 sont légèrement inclinés sur l'horizontale de manière que leurs extrémités proches du plan axial P soient situées au-dessus du sol S à une hauteur nettement supérieure à la hauteur de leurs extrémités opposées, proche des roues 1. Les extrémités des tubes 5 sont fixées par tout moyen approprié, à un différentiel central 6 dont on voit la couronne 7, les planétaires 8 et les satellites 9, de manière à former avec ce dernier un ensemble rigide. Les tubes 5 sont légèrement évasés depuis leurs extrémités proches des roues 1 jusqu'au différentiel 6 et pour cette raison sont couramment appelés "trompettes".

Les tubes 5 contiennent chacun un arbre 11 de transmission dont une extrémité est articulée sur le différentiel 6 par un joint 10, tandis que leurs extrémités opposées sont équipées de joints 12. Ces derniers entraînent en rotation les moyeux correspondants 2, montés dans les fusées 3 par l'intermédiaire de roulements.

Chaque extrémité des tubes 5 est fixée, du côté de la roue associée 1, à un bol 13 qui enveloppe le joint 12 et contient l'extrémité de l'arbre 11. Le bol 13 est articulé sur la fusée 3 autour d'un axe de pivot XX, matérialisé par des tourillons 14. Chaque bol 13 se prolonge, en direction du différentiel 6, par un élément tubulaire 15 terminé par une collerette 16 de fixation à l'extrémité du tube 5, par exemple au moyen de boulons 17.

Les joints (10, 12) peuvent être soit homocinétiques (les joints 12 représentés étant à billes), soit à cardan, des joints homocinétiques étant préférables pour des roues avant en raison des différences de vitesses entre celle-ci dans les virages.

Par rapport à la garde au sol d'un train rectiligne classique, la garde au sol du pont avant 4 est surélevée de la différence entre la hauteur H du différentiel 6 et la hauteur h des axes des roues 1.

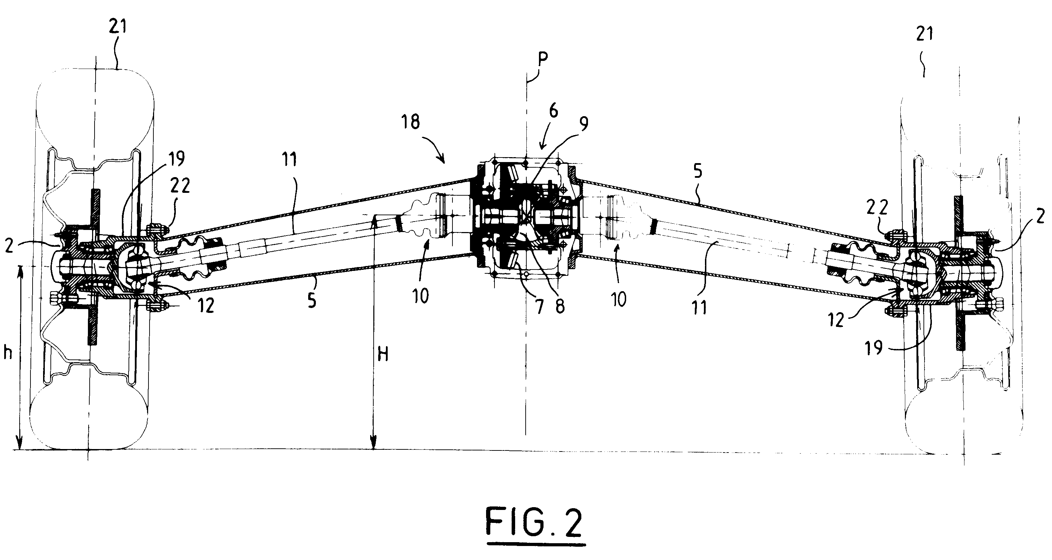

Le pont arrière 18 représenté à la Fig.2 est réalisé de manière similaire au pont avant 4, à l'exception de la fixation des extrémités des "trompettes" 5 aux fusées 19 des roues 21. En effet cette fixation n'est pas articulée comme pour les roues directrices 1, mais rigide. Les extrémités des tubes 5 sont directement solidarisées avec les fusées 19, donc sans pièce intermédiaire 13, par exemple au moyen de boulons 22.

De plus, les joints (10, 12) de ce pont arrière 18 sont de préférence uniquement du type à cardan, moins onéreux que des joints homocinétiques.

L'invention est susceptible de diverses variantes d'exécution. Les joints 12 peuvent être différents de ceux représentés, de même que les organes de liaison entre les tubes 5 et les fusées 3, 19.

## Revendications

1. Pont rigide (4, 18) pour véhicule tout terrain, caractérisé en ce qu'il est cintré de manière à présenter un profil en V renversé, largement ouvert et offrant dans sa partie centrale, une garde au sol supérieure à celle d'un pont rectiligne.

2. Pont rigide selon la revendication 1, caractérisé en ce qu'il comprend deux tubes (5) rigidement fixés à un différentiel central (6), contenant des arbres de transmission (11) équipés à leurs extrémités de joints (10, 12) d'articulation sur le différentiel et sur les moyeux (2) des roues (4, 21).

3. Pont (4) selon la revendication 2, destiné à équiper le train avant du véhicule, caractérisé en ce que les extrémités des tubes (5) opposées au différentiel central (6) sont articulées sur les fusées (3) des roues (1).

4. Pont selon la revendication 3, caractérisé en ce que les extrémités des tubes (5) opposées au différentiel (6) sont chacune rigidement liées à un bol (13) articulé autour d'un axe de pivot (XX) sur la fusée (3) de roue correspondante.

5. Pont selon l'une des revendications 3 et 4, caractérisé en ce que les joints d'articulation (12, 13) sont des joints homocinétiques ou des joints de cardan.

6. Pont selon l'une des revendications 1 et 2 destiné à équiper le train arrière du véhicule, caractérisé en ce que les joints d'articulation (12, 13) sont des joints de cardan.
